# FASCICULE DE BREVET EUROPEEN

(11) **EP 0 592 314 B1**
(45) Date de publication et mention de la délivrance du brevet: **21.05.1997**
(21) Numéro de dépôt: 93402463.9
(22) Date de dépôt: 07.10.1993
(51) Int. Cl.: B65B 11/58, B65G 57/28

(54) **Procédé et dispositif pour le conditionnement de produits isolants compressibles**
Verfahren und Vorrichtung zum Verpacken von zusammendrückbaren Isolationsprodukten
Method and device for packaging compressible isolation products

(30) Priorité: 08.10.1992 FR 9211943
(43) Date de publication de la demande: 13.04.1994
(73) Titulaire: ISOVER SAINT-GOBAIN, 92400 Courbevoie (FR)
(72) Inventeur: Babel, Patrice, Lotissement Meix-au-Midi, F-21190 Corpeau (FR)
(74) Mandataire: Menes, Catherine

(56) Documents cités:
- NL-A- 8 502 816
- US-A- 4 019 639

## Description

La présente invention concerne le conditionnement de produits isolants compressibles notamment en vue de leur transport ou de leur stockage. Plus précisément, l'invention a trait à un procédé de réalisation d'une charge de produits isolants fibreux se présentant à l'état unitaire sous la forme d'un rouleau ou d'un lot sensiblement parallélépipèdique de panneaux, les produits à l'état unitaire étant de préférence revêtus d'une enveloppe protectrice faite par exemple de papier kraft ou d'un film en matière plastique.

Les produits isolants fibreux sont des produits très volumineux, pour une masse relativement faible, des densités de l'ordre de 15 kg/m³ étant par exemple courantes. De ce fait, le coût relatif de leur transport et de leur stockage est grand. Par ailleurs, la laine minérale peut absorber des quantités importantes d'eau, aussi les produits ne doivent-ils pas être exposés à la pluie ou autres intempéries. On sait que ces produits sont présentés à l'état unitaire sous une enveloppe - qui sert d'ailleurs principalement à maintenir le produit à l'état de rouleau ou à rassembler en un lot la série de quelques panneaux - mais celle-ci ne couvre généralement pas la totalité de la surface extérieure du produit et n'est donc pas suffisante pour assurer une protection complète contre les intempéries. D'autre part, pour simplifier les opérations de chargement et de déchargement, il est préférable que ces produits soient palettisés, c'est-à-dire conditionnés par charge d'une dizaine ou de quelques dizaines de produits unitaires, la charge étant posée sur une palette facilitant sa manutention et munie d'une housse ou tout autre moyen équivalent compatible avec un transport dans des véhicules non bâchés et un stockage extérieur.

Du brevet français FR-79.17771, il est connu de constituer une telle charge au moyen de plaques profilées et de liages orthogonaux prenant appui sur ces plaques pour les uns constitués par des feuillards et pour les autres par des plaques. L'ensemble est finalement protégé par une housse. Par ailleurs, il est connu du brevet européen EP-B-72 302 de constituer des piles de colis isolants délimitées par des éléments plans rigides et soumises à une série de compression, les piles étant ensuite assemblées par groupe à l'aide de caisses ou de structures enveloppantes - à base de plaques, de poutres et de moyens de cerclage - qui reconstituent en quelque sorte une caisse. Comme précédemment, l'ensemble est protégé par une housse. Dans ces deux brevets, la charge est obtenue en utilisant toute une série d'éléments de construction du type plaques, raidisseurs, caisses ... qui constituent autant de déchets à détruire au cours du déballage et qui bien sûr, renchérissent le coût du conditionnement des produits.

Cet inconvénient n'existe plus dans le cas du procédé connu du brevet européen EP-B-220 980 consistant dans la formation d'une série de modules, formés par l'empilement d'un certain nombre de produits, leur compression dans le sens de cet empilement et la réunion de ces produits à l'aide d'un film formant une ceinture scellée par collage ou soudure sur elle-même, puis la superposition de ces modules, deux modules étant en contact par leurs faces parallèles au sens de la compression exercée lors de la réalisation des modules. Les piles des modules ainsi constituées sont de préférence assemblées à l'aide d'un film banderolé autour de la pile. La sous-division de la charge en une série de modules est très commode notamment lors des opérations de déballage mais implique un poste d'installation uniquement réservé à la formation de ces modules. D'autre part, le coût des ceintures vient augmenter celui du conditionnement.

Dans le document US-A-4 019 639, on présente une machine fixe destinée à charger une palette avec des ballots de forme allongée constitués par l'assemblage de feuilles. La machine comporte deux plateaux supports montés d'équerre autour d'un axe de pivotement horizontal. Les deux plateaux sont équipés de rouleaux d'axes horizontaux. Au début de l'opération le premier plateau constitue un plan légèrement incliné par rapport à l'horizontale. On y dépose verticalement les ballots qui se déplacent parallèlement à eux-mêmes sous leur propre poids pour venir en appui sur une palette placée verticalement sur l'autre plateau. Lorsqu'un faisceau de ballots verticaux est constitué, les plateaux en équerre pivotent et les ballots couchés sur la palette peuvent être emportés avec elle par un chariot à fourches.

Il doit être toutefois souligné que si toutes les solutions connues de l'art développées pour conditionner des produits fibreux apparaissent relativement complexes, c'est qu'il est nécessaire de toujours s'entourer d'un maximum de précaution pour tenir compte du caractère relativement fragile des produits isolants fibreux et éviter notamment que le conditionnement ne vienne occasionner des déformations permanentes qui altéreraient par exemple la capacité de reprise du volume initial lors du déconditionnement, les produits unitaires - notamment les rouleaux - étant déjà très fortement comprimés.

La présente invention a pour but un procédé simplifié de conditionnement de produits isolants fibreux permettant la réalisation de charges, susceptibles d'être stockées et transportées sans protection particulière, d'un coût relativement faible, en éliminant au maximum tous les éléments "perdus" de construction de la charge, c'est-à-dire tous les éléments dont l'utilisateur doit se débarrasser au moment du déconditionnement.

Ce problème est résolu selon l'invention par un procédé de réalisation d'une charge de produits isolants compressibles notamment de produits isolants fibreux se présentant à l'état unitaire sous la forme d'un rouleau ou d'un lot sensiblement parallélépipèdique de panneaux, dans lequel on dispose une palette verticalement et où l'on vient placer les produits horizontalement en butée sur la palette verticale et où, on fait effectuer à la charge ainsi constituée une rotation de 90° de manière à placer la palette en position horizontale où l'on a disposé à plat une première couche de produits, orientés horizontalement, placés côte à côte, au contact les uns des autres, avant de les mettre en butée sur la palette verticale, où l'on a empilé sur la première couche ainsi constituée au moins une seconde couche de produits, avant de faire effectuer à la charge ainsi constituée sa rotation, dans lequel on dépose une coiffe au sommet de la charge, et où l'on assemble la charge au moyen d'un film banderolé à sa périphérie.

Pour la mise en oeuvre de l'invention, il peut être utilisé des rouleaux - qui seront alors disposés couchés, avec leurs extrémités planes - ou du moins sensiblement planes - en butée sur la palette , de sorte que dans la charge définitive ils seront au contraire debout, avec leurs axes longitudinaux orientés selon la verticale. L'invention s'applique également à des lots de quelques panneaux, préalablement assemblés par exemple au moyen d'un film thermorétractable, lesquels lots présentent une forme sensiblement parallélépipèdique et sont d'un encombrement voisin de celui des rouleaux. Par la suite, il sera fait presque exclusivement référence au cas des rouleaux, mais il doit être entendu que l'invention ne saurait être limitée à ce cas particulier. De préférence, ces rouleaux ou lots de panneaux sont revêtus d'une enveloppe unitaire, par exemple à base de papier kraft ou en matière plastique, mais cette enveloppe n'est pas nécessairement complètement étanche, ni même indispensable, les rouleaux pouvant être maintenus à l'état de rouleaux par exemple par des ceintures, encore que cette solution n'est bien sûr pas préférée.

L'invention nécessite des installations en pratique très peu onéreuses à l'exception du poste de banderolage. On pourra par exemple utiliser un simple mannequin constitué par un chariot portant deux plateaux montés en équerre autour d'un axe de rotation et ainsi susceptibles de pivoter simultanément d'un quart de tour, le premier plateau servant de support pour la palette verticale et le second de support provisoire des rouleaux pendant la formation des piles.

Les opérations de dépose de la palette et d'empilement peuvent aisément être réalisées par une seule personne ou un robot. Dans le cas d'une installation non robotisée, il est intéressant de noter que les charges à manipuler sont relativement légères et que de même la hauteur de la pile reste faible (avec des rouleaux déjà conséquents de 60 cm de large, la troisième et le plus souvent dernière couche, doit seulement être déposée à une hauteur de 1,20 m).

A la limite, la rotation à 90° de la charge peut être effectuée sans maintien latéral de celle-ci. Dans ce cas, lors du transport éventuel du poste de chargement, où sont empilés les rouleaux, au poste de banderolage, la palette est maintenue légèrement inclinée par rapport à l'horizontale, ceci pour éviter la chute des rouleaux. Néanmoins, il est préférable de prévoir des moyens de maintien latéral de la charge agissant pendant la rotation. Ces moyens sont par exemple constitués par des bat-flanc verticaux qui sont rapprochés pour venir serrer la pile juste avant et pendant la rotation. Ces bat-flanc sont de préférence présents dès le stade de constitution de la pile - encore qu'ils sont alors de préférence légèrement écartés, du moins dans leur partie supérieure - de sorte que les rouleaux sont disposés dans un emplacement délimités par quatre côtés et que leur mise en place en est ainsi simplifiée.

Dans une variante plus particulièrement préférée de l'invention, la charge définitive réalisée comporte au moins deux, et de préférence exactement deux étages de rouleaux. Pour ce faire, on procède toujours à plat, c'est-à-dire qu'après avoir disposé sur le mannequin les rouleaux de la première pile, on constitue une seconde pile venant en butée sur la première pile et la rotation est effectuée sur l'ensemble de ces deux piles juxtaposées. Pour aider à la manutention et éviter que l'opérateur n'ait à grimper sur le mannequin, il est avantageux d'utiliser dans ce cas un mannequin dont la partie du plateau destinée à recevoir la seconde pile contiguë peut être escamotée sous la partie servant de support à la première pile et déployée par l'opérateur quand il passe à la deuxième partie de son chargement.

Le procédé selon l'invention permet la réalisation de charges de par exemple 24 rouleaux, soit deux étages de 4 X 3 rouleaux obtenus en disposant deux piles ayant chacune 3 couches de rouleaux de par exemple 1,20 m de long et 60 cm de diamètre. Aucun élément de construction autre que le film de banderolage et la palette ne se retrouve dans la charge définitive, quelques tours de films supplémentaires étant simplement prévus aux endroits critiques par exemple au niveau de la jonction entre les deux étages de la charge, au niveau de la palette et au niveau de la coiffe.

D'autres détails et caractéristiques avantageuses de l'invention ressortent de la description faite ci-après en référence aux dessins annexés qui représentent :
* **figure 1 - 6** : des schémas illustrant diverses étapes du procédé de conditionnement selon l'invention,
* **figure 7** : une vue de côté d'une charge telle qu'obtenue après banderolage.

Le poste de conditionnement selon l'invention est de préférence implanté au bout d'une ou plusieurs lignes de production des produits isolants, peu après que ceux-ci aient été conditionnés à l'état unitaire au moyen d'une enrouleuse (produits en bandes enroulées sur elle-même enveloppées par exemple à l'aide d'une ceinture papier, d'une housse tubulaire ou d'un film thermorétracté) ou d'une empileuse (pour les lots de panneaux).

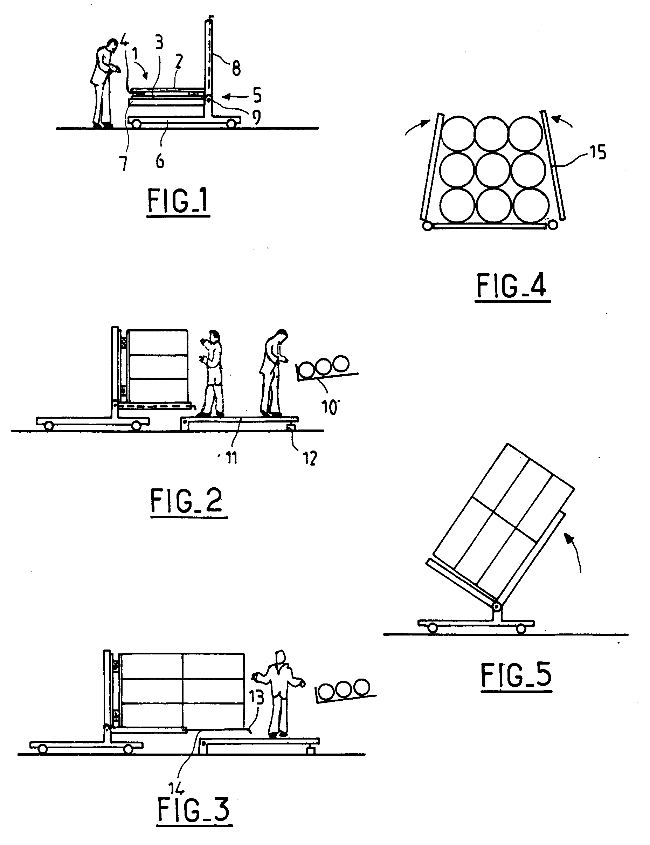

La première opération, schématisée à la figure 1, consiste dans la mise en place de la palette. Cette palette 1 est de préférence constituée de deux plateaux 2, 3 ou caillebotis en bois espacés par des entretoises 4 définissant un espace suffisant pour l'introduction de fourches d'engin de manutention, le plateau inférieur 3 permettant de déplacer aisément sur un chemin de roulement et de gerber des charges. Sur le fond de la palette est agrafé ou fixé par tout autre moyen équivalent un napperon, fait d'un film en matière plastique, par exemple un film de 50 microns en polyéthylène régulièrement perforé pour l'évacuation de l'eau de condensation. La palette 1 est posée sur un mannequin 5 formé d'un chariot 6 et de deux plateaux supports 7 et 8, montés d'équerre autour d'un axe de pivotement 9. Le plateau 7 est de préférence muni de griffes qui peuvent être mises en prises sur les côtés de la palette et ainsi la bloquer pour éviter qu'elle ne tombe quand on fait pivoter l'équerre d'un quart de tour pour venir placer la palette en position verticale.

La palette fixée sur le plateau 7, est placée en position verticale à l'aide du mannequin. Dans cette position illustrée figure 2, le chargement peut débuter. L'opérateur récupère les rouleaux de la table d'accumulation 10 et les dispose sur le plateau 8. Il est de préférence prévu une plate-forme de chargement 11, munie d'un détecteur 12 de présence de l'opérateur qui interdit tout mouvement du mannequin au cours du chargement.

De préférence, le chargement ne débute toutefois qu'après la mise en place de bat-flanc latéraux, associés par exemple au plateau 8, de sorte que les rouleaux vont être placés dans une sorte de caisse ouverte seulement par le haut et le devant. De préférence encore, l'espace dégagé entre les flancs s'accroît de bas en haut ce qui permet d'éviter que des rouleaux d'une même couche ne se chevauchent. L'opérateur va alors disposer successivement des couches de rouleaux couchés, avec leur axe longitudinal perpendiculaire à la palette. Chaque couche peut comporter typiquement, 3 - comme dans le cas représenté - ou 4 rouleaux. Compte tenu des dimensions courantes des véhicules de transport et plus particulièrement celles des wagons de chemin de fer, le nombre de couches est normalement limité de même à 3 ou 4 mais, comme pour le nombre de rouleaux par couche, il ne s'agit pas là d'une limite technologique mais simplement un résultat dicté par le souci d'occuper au mieux la place disponible et de réaliser des charges d'un volume et d'un poids compatible avec les engins de manutention les plus courants.

Une première pile de par exemple 4 X 3 rouleaux formée, l'opérateur dégage - au moyen de la poignée 13 - le plateau 14 qui est constitué par une tôle escamotée sous le plateau 8 pendant la première partie du chargement. Il peut alors constituer une seconde pile qui s'appuie sur la première (figure 3). A ce moment là, les flancs 15 latéraux du mannequin sont resserrés comme illustré figure 4 et les rouleaux s'alignent verticalement.

Dans cette position, on peut procéder au pivotement de la charge (figure 5), qui s'effectue de préférence en concomitance avec le transfert du mannequin vers le poste de banderolage. Après ce pivotement, le mannequin a ainsi retrouvé sa position initiale et les rouleaux sont alors debouts, posés sur la palette.

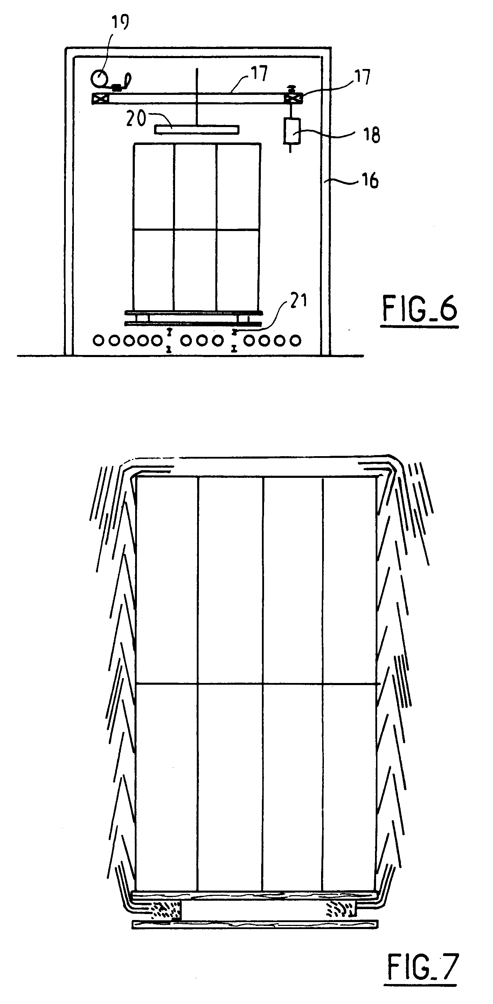

Le poste de banderolage, illustré figure 7, de préférence placé dans une cage 16, comporte par exemple une machine dite à charge fixe essentiellement constituée par un anneau 17 portant un chariot mettant en mouvement un système 19 de déroulement et d'étirage du film 1. Cet anneau porte également le système de mise en place de la coiffe et le système de coupe du film de la coiffe déroulée à partir de la bobine 19. L'anneau 17 est animé d'un mouvement vertical asservi à la rotation du chariot. Associé à cet anneau 17 est prévu un plateau stabilisateur 20 qui a pour double fonction de maintenir les rouleaux en place pendant toute l'opération de banderolage et d'aider à la mise en place correcte de la coiffe. Par ailleurs, le poste de banderolage comporte également un élévateur de palette 21 qui permet de la libérer du mannequin et de la supporter en position haute pendant le banderolage. De préférence, le poste de banderolage est placé au-dessus d'un convoyeur à rouleaux pour permettre l'évacua-tion des charges banderolées. Le système élévateur de palette est logé sous ce convoyeur quand il est en position basse.

Les opérations se déroulent de la manière suivante : dès que la charge est en place dans le poste de banderolage, l'élément élévateur de palette entre en action, débloque les griffes de maintien. Le plateau stabilisateur, dont l'effort par lui exercé, n'est de préférence dû qu'à son propre poids, est alors descendu pour venir bloquer la charge et le banderolage débute par le bas, avec quelques tours qui emprisonnent la palette.

Le banderolage est obtenu à l'aide d'une machine à pré-étirage motorisé, l'allongement mécanique du film, par exemple en polyéthylène, fait suite au passage sur deux rouleaux dont la vitesse circonférentielle est différente et fonction du rapport des diamètres des rouleaux et du rapport des pignons des axes de ces rouleaux. Après cette phase de pré-étirage, la tension du film est contrôlée en faisant passer le film sur un rouleau fou fixé sur deux bras articulés poussés par deux vérins dont la position sur les bras articulés peut être changée pour une augmentation - ou au contraire une diminution - des bras de levier. En début de palette, le film est de préférence maintenu par une pince qui le relâche à la fin du premier tour. Le film utilisé peut être un film polyéthylène dit étirable, de 20 à 30 microns d'épaisseur, d'une capacité d'étirage supérieure à 400 %. A partir du bas, l'anneau est progressivement remonté, une nouvelle station étant effectuée au niveau de la jonction entre les deux étages de la charge. A l'approche du haut de la charge, le plateau stabilisateur est effacé, ce qui est possible, la charge étant auto-stabilisée par le film déjà en place. Une longueur de film de coiffe est alors déroulée, à la longueur souhaitée au-dessus de la charge, le plateau est descendu et la coiffe est coupée de préférence par un couteau mécanique. Pour la coiffe, il est de préférence utilisé un film polyéthylène relativement épais, traité anti U.V., d'au moins 75 microns d'épaisseur, par exemple d'une épaisseur de 100 microns. Le banderolage reprend alors vers le bas, avec de préférence le même taux de recouvrement entre chaque spire que pour les premiers tours (soit par exemple 50%) et la coiffe est ceinturée par quelques tours du film de banderolage. Finalement le film de polyéthylène est soudé sur lui-même et coupé.

Il est aussi possible d'effectuer un cycle équivalent en partant du haut de la charge et en effectuant alors les étapes suivantes :
* N tours haut,
* descente en hélice avec x% de recouvrement,
* N1 tours bas pour prise palette,
* montée en hélice avec x1% de recouvrement,
* N2 tours milieu pour le maintien des couches rouleaux entre elles,
* montée en hélice avec x1% de recouvrement jusqu'au sommet de la palette,
* montée plateau,
* déroulement coiffe,
* descente anneau (bobine, film étirable + coiffe + plateau presseur),
* coupe coiffe,
* 1 tour ceinturage coiffe par le film étirable,
* montée en hélice jusqu'au sommet palette,
* N3 tours haut pour ceinturage de la coiffe,
* soudure - coupe film étirable.

Les nombres N1, N2 et N3 de tours et les pourcentages de recouvrement étant réglés selon les cas.

L'invention permet ainsi de réaliser très simplement des charges de rouleaux ou de panneaux, gerbables car les palettes ne comportent pas de pied et le haut de la charge est couvert par un film assez épais et de ce fait très résistant. De plus, ces charges peuvent être entreposées dehors, sans plus de précaution, sans détérioration de la qualité des produits isolants et notamment sans problème de reprise d'épaisseur.

## Revendications

1. Procédé de réalisation d'une charge de produits isolants compressibles notamment de produits isolants fibreux se présentant à l'état unitaire sous la forme d'un rouleau ou d'un lot sensiblement parallélépipèdique de panneaux, dans lequel on dispose une palette (1) verticalement et où l'on vient placer les produits horizontalement en butée sur la palette verticale (1) et où, on fait effectuer à la charge ainsi constituée une rotation de 90° de manière à placer la palette (1) en position horizontale, **caractérisé en ce qu'**on a disposé à plat une première couche de produits, orientés horizontalement, placés côte à côte, au contact les uns des autres, avant de les mettre en butée sur la palette verticale, on a empilé sur la première couche ainsi constituée au moins une seconde couche de produits, avant de faire effectuer à la charge ainsi constituée sa rotation, **en ce qu'**on dépose une coiffe au sommet de la charge, **et en ce qu'**on assemble la charge au moyen d'un film banderolé à sa périphérie.

2. Procédé selon la revendication 1, **caractérisé en ce que** la charge est maintenue latéralement pendant la rotation.

3. Procédé selon la revendication 2, **caractérisé en ce que** le maintien latéral est obtenu par des bat-flancs (15) mis en place avant de disposer les couches de produits et resserrés pour la rotation.

4. Procédé selon l'une des revendications précédentes, **caractérisé en ce qu'**après avoir réalisé une première pile, on constitue une seconde pile venant en butée sur la première pile **et en ce que** la rotation est effectuée sur l'ensemble de ces deux piles horizontales juxtaposées.

5. Procédé selon l'une des revendications précédentes, **caractérisé en ce que** la coiffe est constituée par un film de polyéthylène de plus de 75 microns d'épaisseur.

6. Procédé selon l'une des revendications précédentes, **caractérisé en ce que** le film de banderolage est un film polyéthylène de 20 à 30 microns d'épaisseur, d'une capacité d'étirage mécanique supérieure à 400 %.

7. Dispositif pour la mise en oeuvre de l'invention selon l'une des revendications précédentes, et comportant deux plateaux supports (7, 8) montés d'équerre autour d'un axe de pivotement (9), une palette (1) étant fixée sur l'un des plateaux supports (7), **caractérisé en ce que** l'autre plateau (8) comporte des bas-flancs latéraux (15) susceptibles d'être rapprochés pour venir serrer la charge pendant la rotation.

8. Dispositif selon la revendication 7, **caractérisé en ce que** le plateau (8) destiné à suporter les couches de produits pendant le chargement est en deux parties, la partie (14) destinée à recevoir une seconde pile contiguë étant escamotée pendant la mise en place de la première pile.

9. Dispositif selon la revendication 7 ou 8, **caractérisé en ce qu'**il constitue un ensemble mobile monté sur un chariot (6).

## Claims

1. Method for producing a load of compressible insulating products, in particular fibrous insulating products, in unitary condition in the form of a roll or a substantially parallelepipedal set of panels, in which a pallet (1) is positioned vertically and in which the products are placed horizontally, abutting the vertical pallet (1), and in which the load thus constituted is pivoted through 90° so as to position the pallet (1) in a horizontal position, characterised in that a first layer of products is positioned in one plane, horizontally, adjacent one another and in contact with one another prior to being brought into abutment with the vertical pallet and there is stacked, on the first layer thus constituted, at least a second layer of products, before the load thus formed is pivoted; and in that a cover is positioned on top of the load; and in that the load is assembled by means of a film wrapped about its periphery.

2. Method according to Claim 1, characterised in that the load is retained laterally during the pivoting.

3. Process according to Claim 2, characterised in that the lateral retention is obtained by means of low sides which are put into position before the layers of products are positioned and drawn together for the pivoting.

4. Process according to any one of the preceding claims, characterised in that after having performed a first stack, a second stack is brought into abutment on the first stack and in that the assembly of these juxtaposed horizontal stacks are pivoted.

5. Method according to any one of the preceding claims, characterised in that the cover is formed of a polyurethane film more than 75 µm thick.

6. Method according to any one of the preceding claims, characterised in that the wrapping film is a polyethylene film 20 to 30 µm thick, with a mechanical stretching capacity of greater than 400%.

7. Device for implementing the invention according to any one of the preceding claims, comprising two support plates (7, 8) mounted at an angle about a swivel pin (9), a palette (1) being secured on one of the support plates (7), characterised in that the other plate (8) comprises lateral low sides (15) which are capable of being drawn closer to one another in order to clamp the load during the pivoting.

8. Device according to Claim 7, characterised in that the plate (8) intended to support the layers of products during loading is in two parts, the part (14), which is intended to receive a second adjacent stack, being retracted whilst the first stack is being put into position.

9. Device according to Claim 7 or 8, characterised in that it forms a movable assembly mounted on a carriage (6).

## Patentansprüche

1. Verfahren zum Herstellen eines Großgebindes von komprimierbaren Dämmprodukten, insbesondere Faserdämmprodukten, welche im vereinzelten Zustand in Form von Rollen bzw. als im wesentlichen parallelepipedförmige Stapel von Platten vorliegen, bei dem eine Palette (1) vertikal angeordnet ist und die Produkte horizontal angeordnet werden, so daß ihre Stirnflächen an der vertikal angeordneten Palette (1) anliegen, und an dem auf diese Weise zusammengestellten Gebinde eine 90°-Drehung durchgeführt wird, wodurch die Palette (1) in eine horizontale Position gebracht wird, **dadurch gekennzeichnet, daß** eine erste Lage von horizontal ausgerichteten Produkten seitlich nebeinander in gegenseitigem Kontakt liegend angeordnet wird, bevor diese an die vertikale Palette angelegt werden, und auf der derart gebildeten ersten Lage mindestens eine zweite Lage von Produkten aufgestapelt wird, bevor an dem derart gebildeten Gebinde die Drehung durchgeführt wird, **daß** auf die Oberseite des Gebindes eine Haube bzw. Abdeckung aufgelegt wird, und **daß** das Gebinde mittels einer um seinen Umfang gewickelten Folie zusammengefaßt wird.

2. Verfahren nach Anspruch 1, **dadurch gekennzeichnet, daß** das Gebinde während der Drehung seitlich gehalten wird.

3. Verfahren nach Anspruch 2, **dadurch gekennzeichnet, daß** der seitliche Halt mittels Begrenzungselementen (15) erhalten wird, welche vor dem Anordnen der Lagen von Produkten angebracht und für die Drehung enger gestellt werden.

4. Verfahren nach einem der vorhergehenden Ansprüche, **dadurch gekennzeichnet, daß** nach der Herstellung eines ersten Stapels ein zweiter, an den ersten Stapel anstoßender Stapel gebildet wird, **und daß** die Drehung an den beiden horizontal benachbarten Stapeln insgesamt durchgeführt wird.

5. Verfahren nach einem der vorhergehenden Ansprüche, **dadurch gekennzeichnet, daß** die Haube aus einer Polyethylenfolie mit einer Dicke von mehr als 75 µm besteht.

6. Verfahren nach einem der vorhergehenden Ansprüche, **dadurch gekennzeichnet, daß** die Folie zum Umwickeln eine Polyethylenfolie mit einer Dicke von 20 bis 30 µm und einer mechanischen Reckfähigkeit von mehr als 400% ist.

7. Vorrichtung für die Anwendung der Erfindung gemäß einem der vorhergehenden Ansprüche, welche zwei im rechten Winkel zueinander um eine Schwenkachse (9) angebrachte Tragplatten (7, 8) sowie eine auf einer der Tragplatten (7) festgelegte Palette (1) aufweist, **dadurch gekennzeichnet, daß** die andere Platte (8) zwei seitliche Begrenzungselemente (15) aufweist, welche einander angenähert werden können, so daß sie das Gebinde während der Drehung einklemmen.

8. Vorrichtung nach Anspruch 7, **dadurch gekennzeichnet, daß** die Platte (8), welche die Lagen von Produkten während des Beladens trägt, aus zwei Teilen besteht, wobei der zum Aufnehmen eines angrenzenden zweiten Stapels vorgesehene Teil (14) während des Anordnens des ersten Stapels versenkt ist.

9. Vorrichtung nach Anspruch 7 oder 8, **dadurch gekennzeichnet, daß** sie eine auf einem Wagen (6) angebrachte, verfahrbare Einheit bildet.
